# EUROPEAN PATENT APPLICATION

(11) **EP 2 341 194 A2**
(43) Date of publication of application: **06.07.2011**
(21) Application number: 10161929.4
(22) Date of filing: 04.05.2010
(51) Int. Cl.: E03C 1/04

(54) **Faucet with protective layer**

(30) Priority: 31.12.2009 TW 098146480
(71) Applicant: Geann Industrial Co., Ltd., Lu Kang Town, Changhwa, Chinese Taipei (CN)
(72) Inventor: Wang, Rubin, Changhwa (TW)
(74) Representative: Lang, Christian

(57) **Abstract**

A faucet with a protective layer is revealed. The faucet includes an inner layer and an outer layer, connected with each other. By color bleeding effect of the outer layer, a color of the inner layer is displayed. Moreover, the outer surface provides both protective and insulating effects so as to prevent the inner layer from being scratched or protect the inner layer from color fading caused by contact with air and water.

## Description

### BACKGROUND OF THE INVENTION

### 1. Fields of the invention

The present invention relates to a faucet, especially to a faucet with a protective layer that prevents scratches and color-fading of a colored layer.

### 2. Descriptions of Related Art

Generally, components of faucets available now such as main bodies and control handles are produced by plastic injection molding. After being molded, the main bodies and control handles of the faucets are deposited with a surface layer by electroplating so as to improve its sense of quality. However, the main bodies and the control handles of faucets are used in places where water drains out so that they are easily to have water spots or water stains on surfaces thereof. Thus users need to brush or scrub them frequently. There is no protection on the surface layer so that the electroplated surface layer is easily to have scuffs or pits that have negative effects on the aesthetic sense of the faucets. As to the faucet in which a whole assembly is produced by plastic injection molding at a time, they may come into contact with air and water quite often and have color fading after being used for a period of time. Thus there is a space for improvement.

### SUMMARY OF THE INVENTION

Therefore it is a primary object of the present invention to provide a faucet with a protective layer that overcomes the above shortcomings of conventional faucets such as the surface layer of the faucet is easily scratched or coming off during cleaning processes, or color-fading of the whole faucet assembly that is produced by plastic injection molding at a time.

In order to achieve the above object, a faucet with a protective layer according to the present invention consists of an inner layer and an outer layer, connected with each other. By the color bleeding effect of the outer layer, a color of the inner layer is displayed. Moreover, the scratches on the inner layer or color fading caused by contact with air and water can be prevented by protective and insulating effects of the outer surface. The outer surface is a transparent housing and is able to be produced into various faucet accessories such as a faucet body or a control handle. The outer layer includes a space with similar shape therein while the inner layer is mounted into the outer layer from an opening on a bottom of the housing and is connected with each wall on every side of the space. The inner layer is molded to have various colors user required by a plurality of processing techniques. The inner layer includes a decorative surface with the required color that is facing toward and is mounted into the space of the outer layer so as to connect with the outer layer. Thereby a faucet with a protective layer is produced.

Compared with conventional faucets, the present invention has following effects: (1). The outer surface of the faucet is transparent and covering over the decorative surface of the inner layer for protection. When the outer surface has scratches caused during scrubbing of water stains, the scratches on the outer surface is covered up because that the color of the inner layer is strong and deep and the scratches are not formed on the inner layer directly. (2). The decorative surface of the inner layer of the faucet according to the present invention is covered and protected by the outer layer so as to avoid direct contact with air or water. Thus the decorative surface will not have color fading after long term use.

### BRIEF DESCRIPTION OF THE DRAWINGS

The structure and the technical means adopted by the present invention to achieve the above and other objects can be best understood by referring to the following detailed description of the preferred embodiments and the accompanying drawings, wherein:
Fig. 1 is a perspective view of an embodiment according to the present invention;
Fig. 2 is a cross sectional view and a partial enlarged view of an embodiment according to the present invention;
Fig. 3 is an explosive view showing an inner layer of an embodiment connected by heat transfer printing technique according to the present invention;
Fig. 4 is a schematic drawing showing an inner layer of an embodiment connected by powder coating technique according to the present invention;
Fig. 5 is an explosive view showing an outer layer of an embodiment formed by injection and covered the inner layer according to the present invention.

### DETAILED DESCRIPTION OF THE PREFERRED EMBODIMENT

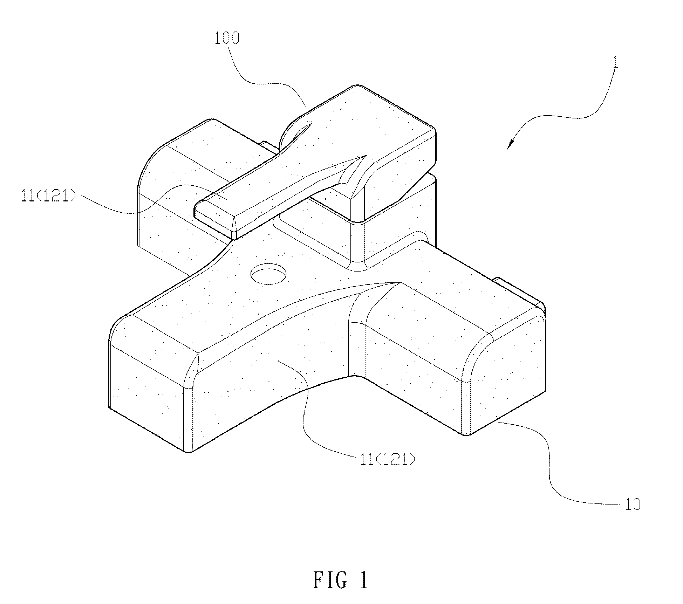

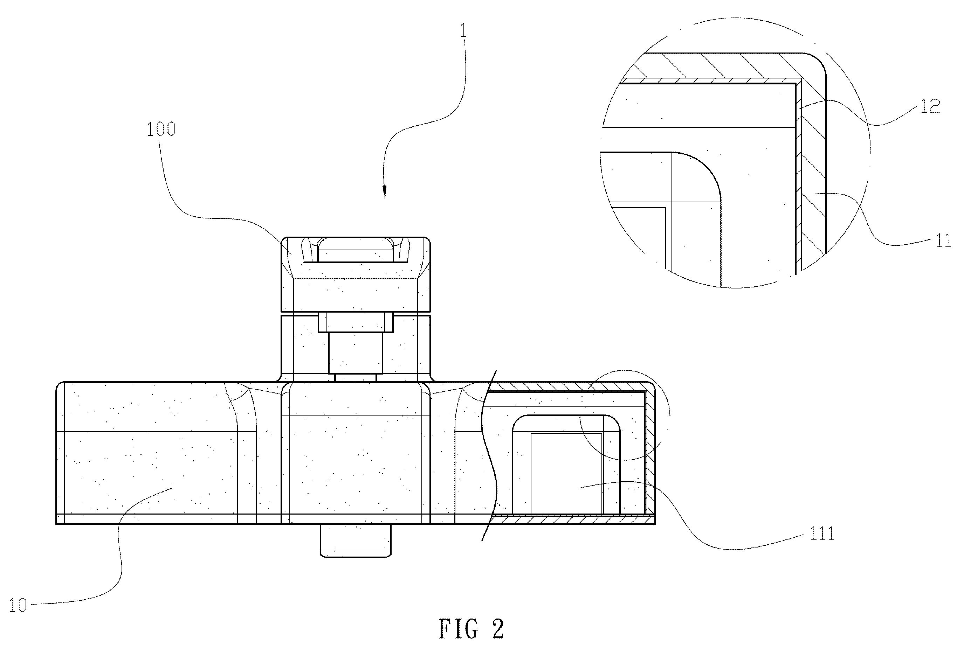

Referring to Fig. 1 and Fig. 2, a faucet 1 includes an outer layer 11 and an inner layer 12 that are connected and assembled with each other. Due to color bleeding of the outer layer 11, the color of the inner layer 12 appears. Moreover, by a protective effect and an insulating effect the outer layer 11 provides, the scratches or color fading of the inner layer 12 caused by contact with water or air can be prevented.

The outer layer 11 is a transparent housing and is able to be produced into various faucet accessories such as a faucet body 10 or a control handle 100, etc. The outer layer 11 includes a space 111 with similar shape therein. The inner layer 12 is loaded into the outer layer 11 from an opening on a bottom of the housing and is connected with each wall on every side of the space 111.

The inner layer 12 is produced and molded with various colors user required by a plurality of processing techniques. The inner layer 12 includes a decorative surface 121 that has the required color(s) and faces toward the space 111 of the outer layer 11 to be mounted into the space 111 and connected with the outer layer 11. Thus a faucet with a protective layer is produced.

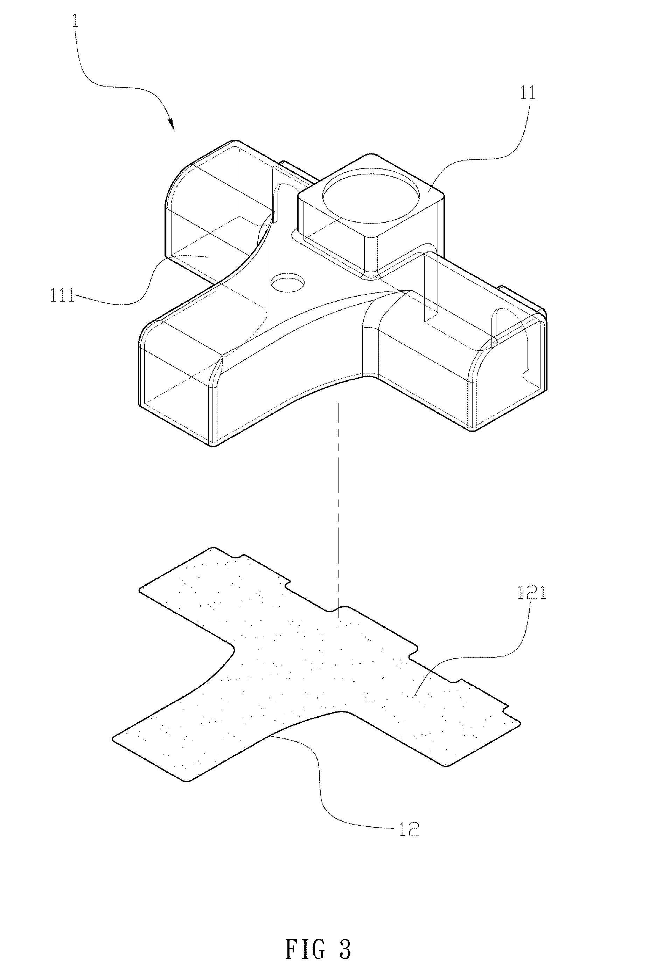

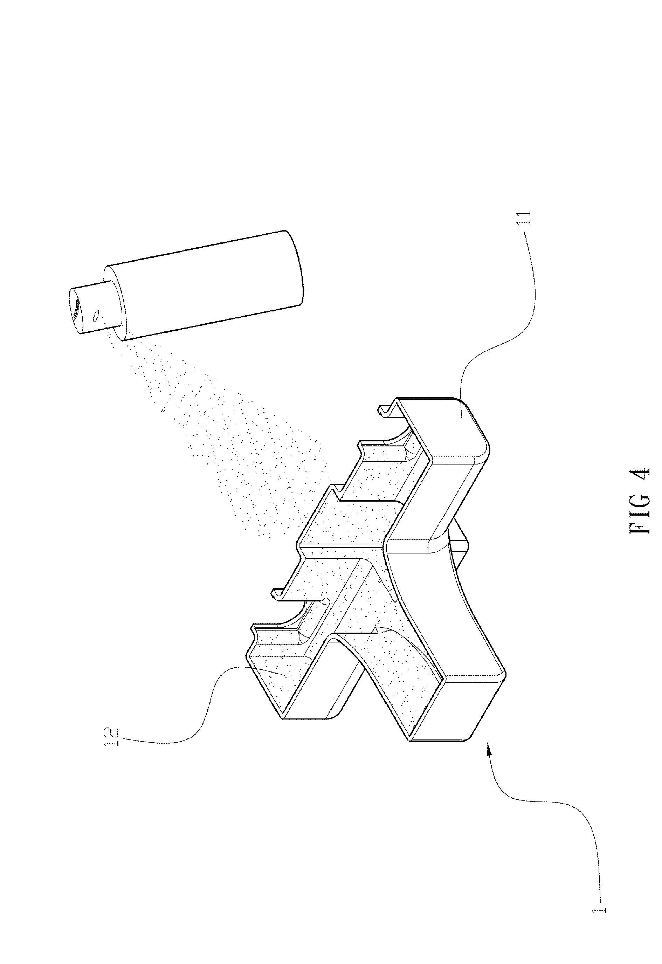

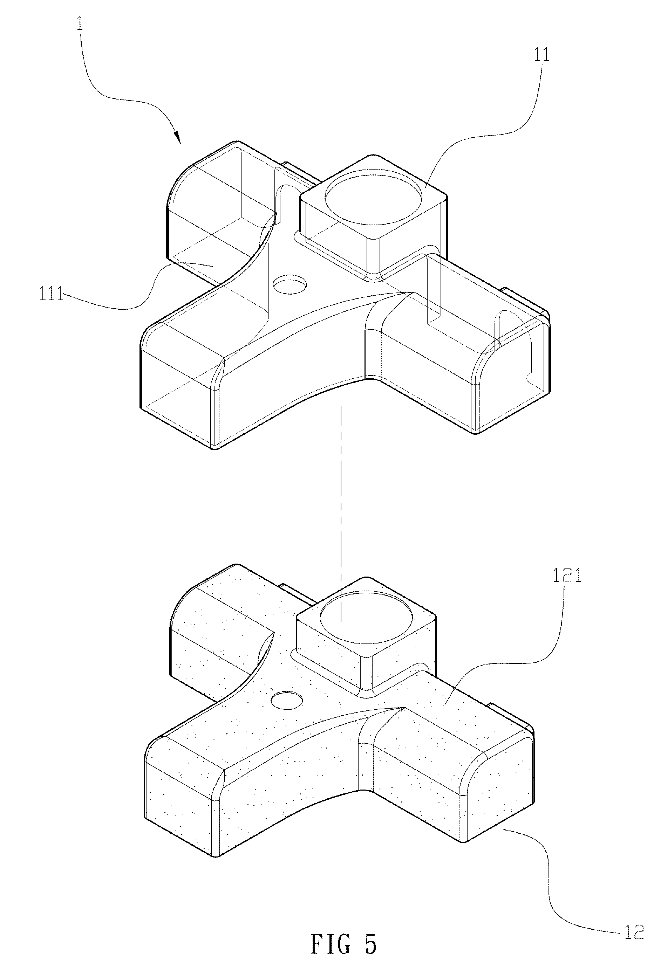

As mentioned in above, the inner layer 12 is connected with an inner surface of the transparent outer layer 11 molded in advance by various techniques such as heat transfer printing (as shown in Fig. 3), powder coating (as shown in Fig. 4), vacuum sputtering, etc. By these techniques, a thin-film inner layer 12 is formed on the space 111 of the outer layer 11. Or the inner layer 12 is formed by injection molding in advance while then the outer layer 11 is covering the inner layer 12 and is also formed by injection molding, as shown in Fig. 5. Thus the inner layer 12 is produced to have various colors required by changes of colors of plastic materials, different colors of heat transfer printing films or different colors of paints.

The faucet with the protective layer has following advantages:
(1) The transparent outer layer 11 is covered over the decorative surface 121 of the inner layer 12 for protection. The scratches are difficult to be discovered because that the scratches are not formed on the inner layer 12 directly and the color of the inner layer 12 is strong and dark when the outer layer 11 is scratched during scrubbing processes for removing water spots. Thus aesthetic damage caused by scratches on the appearance can be avoided.
(2) The decorative surface 121 of the inner layer 12 is covered and protected by the outer layer 11 so that the decorative surface 121 will not contact with air or water directly. Thus the decorative surface 121 will not fade even after long term use.

Additional advantages and modifications will readily occur to those skilled in the art. Therefore, the invention in its broader aspects is not limited to the specific details, and representative devices shown and described herein. Accordingly, various modifications may be made without departing from the spirit or scope of the general inventive concept as defined by the appended claims and their equivalents.

## Claims

1. A faucet with a protective layer comprising an outer layer and an inner layer connected with each other; a color of the inner layer shows due to color bleeding of the outer layer and scratches or color fading caused by contact with air and water of the inner layer are prevented by protective and insulating effects of the outer layer;
wherein the outer layer is a transparent housing having a space with similar shape therein so that the inner layer is mounted into the outer layer from an opening on a bottom of the housing and is connected with each wall on every side of the space; the inner layer with various colors required having a colored decorative surface that is mounted into the space of the outer layer and is connected with the outer layer so as to produce the faucet with a protective layer.

2. The device as claimed in claim 1, wherein the outer layer is produced into various faucet accessories such as a faucet body or a control handle.

3. The device as claimed in claim 1, wherein the inner layer is connected with an inner surface of the transparent outer layer molded in advance by heat transfer printing; during heat transfer printing, the inner layer that is a thin film is formed on the space of the outer layer.

4. The device as claimed in claim 1, wherein the inner layer is connected with an inner surface of the transparent outer layer molded in advance by powder coating; during powder coating, the inner layer that is a thin film is formed on the space of the outer layer.

5. The device as claimed in claim 1, wherein the inner layer is connected with an inner surface of the transparent outer layer molded in advance by vacuum sputtering; during vacuum sputtering, the inner layer that is a thin film is formed on the space of the outer layer.

6. The device as claimed in claim 1, wherein the inner layer is obtained by injection molding in advance and then the outer layer is also formed by injection molding, covering the inner layer so that the inner layer with different colors is produced by changes of colors of plastic material.
